(19) **Europäisches Patentamt**

**European Patent Office**

**Office européen des brevets**

(11) **EP 1 270 658 A1**

(12) **EUROPÄISCHE PATENTANMELDUNG**

(43) Veröffentlichungstag:
02.01.2003 Patentblatt 2003/01

(51) Int Cl.[7]: **C08K 5/06**, C08L 21/00

(21) Anmeldenummer: 02011235.5

(22) Anmeldetag: 22.05.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **25.06.2001 DE 10130500**

(71) Anmelder: **Degussa AG**
**40474 Düsseldorf (DE)**

(72) Erfinder:
• **Luginsland, Hans-Detlef, Dr.**
**50968 Köln (DE)**
• **Korch, Andrea**
**50933 Köln (DE)**
• **Wissner, Robert**
**60439 Frankfurt (DE)**

(54) **Kautschukmischungen**

(57) Kautschukmischungen, enthaltend

(a) einen Kautschuk oder eine Mischung von Kautschuken,
(b) mindestens einen Füllstoff und
(c) ein Verarbeitungshilfsmittel der allgemeinen Formel (I)

$$R^1 - O - R^2 \qquad (I).$$

Sie werden hergestellt, indem man den Kautschuk oder die Mischung von Kautschuken, den Füllstoff und das Verarbeitungshilfsmittel gemäß der Formel I in einem Mischaggregat mischt.
Sie können in Formkörper verwendet werden.

**EP 1 270 658 A1**

**Beschreibung**

Die Erfindung betrifft Kautschukmischungen, ein Verfahren zu deren Herstellung und deren Verwendung.

Aus EP 0 761 734 sind Kautschukmischungen bekannt, enthaltend mindestens ein Polymer aus der Gruppe der Dienkautschuke, 5-100 phr fein verteilte Kieselsäure, 0-80 phr Ruß, gegebenenfalls 0,2-10 phr Silankupplungsmittel und 0,5-20 phr zumindest einer nichtaromatischen viskositätssenkenden Substanz, die auf den Elementen C, H und O basiert, einen Bereich mit mindestens 2 Hydroxylgruppen besitzt, die als 1,2- oder 1,3- Diol vorliegen, und einen Bereich aus mindestens 2 chemisch verbundenen C-Atomen besitzt, wobei weder diese noch ihre chemisch gebundenen Nachbar-C-Atome mit O substituiert sind.

Nachteil der bekannten Kautschukmischungen sind die schlechten dynamischen Eigenschaften, insbesondere tan δ 60°C-Werte.

Aufgabe der vorliegenden Erfindung ist es eine Kautschukmischung zur Verfügung zu stellen, die ein hervorragendes Verarbeitungsverhalten (niedrige Viskosität, kurze Vulkanisationszeiten) und verbesserte Vulkanisatdaten (zum Beispiel hoher Verstärkungsfaktor, niedriger Permanent Set und niedriger Hystereseverlust) aufweist.

Gegenstand der Erfindung ist eine Kautschukmischung, welche dadurch gekennzeichnet ist, daß diese enthält

(a) einen Kautschuk oder eine Mischung von Kautschuken,
(b) mindestens einen Füllstoff und
(c) ein Verarbeitungshilfsmittel der allgemeinen Formel (I)

$$R^1 - O - R^2 \tag{I,}$$

wobei

$R^1$, $R^2$ gleich oder verschieden sein können und aus hydroxisubstituierten $C_1$ bis $C_8$ Alkylresten bestehen, mit der Maßgabe, daß die hydroxisubstituierten Alkylreste $R^1$ und $R^2$ einzeln oder zusammen keinen Bereich mit mindestens 2 Hydoxylgruppen besitzt, die als 1,2- oder 1,3-Diole vorliegen.

Das Verarbeitungshilfsmittel kann keinen Bereich aus mindestens 2 chemisch verbundenen C-Atomen besitzen, wobei weder diese noch ihre chemisch gebundenen Nachbar-C-Atome mit O substituiert sind.

Als Kautschuk können Naturkautschuk und/oder Synthesekautschuke verwendet werden. Bevorzugte Synthesekautschuke sind beispielsweise bei W. Hofmann, Kautschuktechnologie, Genter Verlag, Stuttgart 1980, beschrieben. Sie können unter anderem

- Polybutadien (BR)

- Polyisopren (IR)

- Styrol/Butadien-Copolymerisate mit Styrolgehalten von 1 bis 60, vorzugsweise 5 bis 50 Gew.-% (SBR)

- Isobutylen/Isopren-Copolymerisate (IIR)

- Butadien/Acrylnitril-Copolymere mit Acrylnitrilgehalten von 5 bis 60, vorzugsweise 10 bis 50 Gew.-% (NBR)

- Ethylen/Propylen/Dien-Copolymerisate (EPDM)

sowie Mischungen dieser Kautschuke umfassen.

In einer bevorzugten Ausführungsform können die Kautschuke schwefelvulkanisierbar sein.

Als Füllstoff können silikatische Füllstoffe und/oder Ruß eingesetzt werden.

Als silikatische Füllstoffe können gefällte Kieselsäuren oder Silikate eingesetzt werden.

Als Ruß können Furaceruß, Gasruß, Channelruß, Flammruß, Thermalruß, Acetylenruß, Plasmaruß, Inversionsruße, bekannt aus DE 195 21 565, Si-haltige Ruße, bekannt aus WO 98/45361 oder DE 19613796, oder metallhaltige Ruße, bekannt aus WO 98/42778, Lichtbogenruß und Ruße, die Nebenprodukte chemischer Produktionsprozesse sind, verwendet werden. Der Ruß kann durch vorgelagerte Reaktionen aktiviert werden, beispielsweise Oxidation.

Als Verarbeitungshilfsmittel kann 1,7-Dihydroxi-dipropylether, 2,6-Dihydroxi-dipropylether oder 3,5-Dihydroxi-dipropylether eingesetzt werden.
Die Kautschukmischung kann ein Organosilan enthalten.

Die Kautschukmischungen können 10 bis 200 Gew.-Teile Füllstoff, 0,02 bis 10 Gew.-Teile Verarbeitungshilfsmittel der Formel I und gegebenenfalls 0,02 bis 10 Gew.-Teile Organosilan enthalten, wobei die Gew.-Teile auf 100 Gew.-Teile Kautschuk bezogen sind.

Als Organosilan kann man eine Organosiliziumverbindung der allgemeinen Formel (II)

$$Z\text{-}Alk\text{-}S_x\text{-}Alk\text{-}Z \qquad\qquad (II)$$

verwenden, mit Z gleich $SiR^1R^1R^2$, $SiR^1R^2R^2$ oder $SiR^2R^2R^2$, in denen $R^1$ eine lineare oder verzweigte Kohlenstoffkette mit 1-6 Kohlenstoffatomen, ein Cycloalkanrest mit 5-12 Kohlenstoffatomen, ein Benzylrest oder ein halogen- oder alkylsubstituierter Phenylrest ist,

$R^2$ eine Alkoxygruppe mit linearer oder verzweigter Kohlenstoffkette mit 1-6 C Atomen, eine Cycloalkoxygruppe mit 5-12 C-Atomen, eine halogen- oder alkylsubstituierte Phenoxygruppe oder eine Benzyloxygruppe ist,

Alk einen zweiwertigen, gesättigten linearen oder verzweigten Kohlenwasserstoffrest mit $C_1$-$C_{10}$, vorzugsweise Methylen, Ethylen, i-Propylen, n- Propylen, i-Butylen, n-Butylen, n-Pentylen, 2-Methylbutylen, 3-Methylbutylen, 1,3-Dimethylpropylen oder 2,3-Dimethylpropylen bedeuten,

x eine Zahl von 1 bis 12, vorzugsweise 1 bis 8, besonders bevorzugt 2 bis 6, ist.

Als Organosilan kann man eine Organosiliziumverbindung der allgemeinen Formel (III)

$$X^1X^2X^3Si\text{-}A \qquad\qquad (III)$$

verwenden, wobei $X^1$, $X^2$, $X^3$ unabhängig voneinander, H,

$(C_1$-$C_{12})$Alkyl, $(C_1$-$C_8)$Alkoxy, $(C_1$-$C_4)$ Haloalkyl, Aryl,

$(C_7$-$C_{16})$ Aralkyl, Halogen oder Hydroxy ist,

A geradkettige, verzweigte oder zyklische $(C_1$-$C_{18})$Alkyl, beispielsweise Methyl-, Ethyl-, n-Propyl, n-Butyl, n-Pentyl, n-Hexyl, Isopropyl oder tert.-Butyl, $(C_1$-$C_5)$ Alkoxy, beispielsweise Methoxy, Ethoxy, Propoxy, Butoxy, Isopropoxy, Isobutoxy oder Pentoxy, Halogen, beispielsweise Fluor, Chlor, Brom oder Jod, Hydroxy, Nitril, $(C_1$-$C_4)$ Haloalkyl, $NO_2$, $(C_1$-$C_8)$ Thioalkyl, $NH_2$, $NHR^1$, $NR^1R^2$, Alkenyl, Aryl oder $(C_7$-$C_{16})$ Aralkyl ist.

Besonders bevorzugt können als Organosilane

Bis(triethoxysilylpropyl)tetrasulfan,
Bis(triethoxysilylpropyl)disulfan,
Bis(trimethoxysilylpropyl)tetrasulfan oder
Bis(trimethoxysilylpropyl)disulfan eingesetzt werden.

Die erfindungsgemäßen Kautschukmischungen können weitere bekannte Kautschukhilfsmittel enthalten wie zum Beispiel Vernetzer, Vulkanisationsbeschleuniger, Reaktionsbeschleuniger, -verzögerer, Alterungsschutzmittel, Stabilisatoren, Weichmacher, Wachse, Metalloxide sowie Aktivatoren, wie Triethanolamin, Polyethylenglykol, Hexantriol.

Die Kautschukhilfsmittel können in üblichen Mengen, die sich unter anderem nach dem Verwendungszweck richten, eingesetzt werden. Übliche Mengen sind zum Beispiel Mengen von 0,1 bis 50 Gew.-%, bezogen auf Kautschuk.

Als Vernetzer können Schwefel oder organische Schwefelspender dienen.

Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel können in Mengen von 0,1 bis 10 Gew.-%, bevorzugt 0,1 bis 5 Gew.-%, bezogen auf den eingesetzten Kautschuk, eingesetzt werden.

Ein weiterer Gegenstand der Erfindung ist ein Verfahren zur Herstellung der erfindungsgemäßen Kautschukmischungen, welches dadurch gekennzeichnet ist, daß man den Kautschuk oder die Mischung von Kautschuken, den Füllstoff und das Verarbeitungshilfsmittel gemäß der Formel I in einem Mischaggregat mischt.

Die Abmischung der Kautschuke mit dem Füllstoff, dem Verarbeitungshilfsmittel gemäß der Formel I und gegebenenfalls das Organosilan und weitere Kautschukhilfsmittel kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, gegebenenfalls die Organosilane und die Kautschukhilfsmittel bei 100 bis 170°C eingemischt werden. Dabei kann sich die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40-110°C mit den Vernetzungschemikalien und dem Verarbeitungshilfsmittel gemäß der Formel I versetzt werden und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischungen kann bei Temperaturen von 80 bis 200°C, bevorzugt 130 bis 180 °C, gegebenenfalls unter Druck von 10 bis 200 bar erfolgen.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen verwendet werden.

Ein weiterer Gegenstand der Erfindung sind Formkörper erhältlich aus der erfindungsgemäßen Kautschukmischung durch Vulkanisation.

Die erfindungsgemäßen Kautschukmischungen weisen den Vorteil auf, dass die Vulkanisationszeit verkürzt, $\Delta T_{center}$, Permanent Set, Viskosität und tan $\delta$ 60°C (korreliert mit Rollwiderstand) erniedrigt ist und der Verstärkungsfaktor (Spannungswert 300%/100%) und tan $\delta$ 0°C (korreliert mit Naßrutschen) erhöht ist.

**Beispiele**

Die für die Kautschukmischungen verwendete Rezeptur ist in der Tabelle 1 angegeben. Dabei bedeutet die Einheit phr Gewichtsanteile bezogen auf 100 Teile des eingesetzten Rohkautschuks. Das allgemeine Verfahren zur Herstellung von Kautschukmischungen und deren Vulkanisate ist in dem folgenden Buch beschrieben: "Rubber Technology Handbook", W. Hofmann, Hanser Verlag 1994.

Tabelle 1

| Substanz | Vergleichsbeispiel 1 | Vergleichsbeispiel 2 | Vergleichsbeispiel 3 | Vergleichsbeispiel 4 | Beispiel 1 |
|---|---|---|---|---|---|
| **1. Stufe** | [phr] | [phr] | [phr] | [phr] | [phr] |
| SMR 10 | 5 | 5 | 5 | 5 | 5 |
| BR | 20 | 20 | 20 | 20 | 20 |
| SBR | 111 | 111 | 111 | 111 | 111 |
| N 234 | 5 | 5 | 5 | 5 | 5 |
| Ultrasil 7000 GR | 60 | 60 | 60 | 60 | 60 |
| X 50 S | 9 | 9 | 9 | 9 | 9 |
| aromatisches Öl | 4 | 4 | 4 | 4 | 4 |
| Struktol A 60 | 3 | - | - | - | - |
| Stearinsäure HTI | 1 | 1 | 1 | 1 | 1 |
| **2. Stufe** | [phr] | [phr] | [phr] | [phr] | [phr] |
| Batch Stufe 1 | | | | | |
| Ultrasil 7000 GR | 25 | 25 | 25 | 25 | 25 |
| X 50 S | 4 | 4 | 4 | 4 | 4 |
| aromatisches Öl | 4 | 4 | 4 | 4 | 4 |
| Vulkanox 4020 | 2 | 2 | 2 | 2 | 2 |
| Vulkanox HS/LG | 2 | 2 | 2 | 2 | 2 |
| Antilux 654 | 1 | 1 | 1 | 1 | 1 |
| Struktol WB 212 | 2 | 2 | 1 | 1 | 1 |
| Wingstay 100 | 0,5 | 0,5 | 0,5 | 0,5 | 0,5 |
| **3. Stufe** | [phr] | [phr] | [phr] | [phr] | [phr] |
| Batch Stufe 2 1,7-Propandiol | - | 3 | - | - | - |
| Trimethylol-propan | - | - | 3 | - | - |
| Pentaerythrit >98% | - | - | - | 3 | - |
| 1,7-Dihydroxi- | - | - | - | - | 3 |

Tabelle 1    (fortgesetzt)

| Substanz | Vergleichsbeispiel 1 | Vergleichsbeispiel 2 | Vergleichsbeispiel 3 | Vergleichsbeispiel 4 | Beispiel 1 |
|---|---|---|---|---|---|
| **3. Stufe** | [phr] | [phr] | [phr] | [phr] | [phr] |
| dipropylether | | | | | |
| ZnO | 3 | 3 | 3 | 3 | 3 |
| Vulkacit D | 2 | 2 | 2 | 2 | 2 |
| Vulkacit CZ/EG-C | 1,7 | 1,7 | 1,7 | 1,7 | 1,7 |
| Schwefel | 1,7 | 1,7 | 1,7 | 1,7 | 1,7 |

Bei dem Polymer SMR 10 handelt es sich um Naturkautschuk.

Bei dem 1,4-Polybutadien (BR) handelt es sich um ein mit 37,5 Teilen Öl verstrecktes Polybutadien mit einem cis 1,4-Gehalt von > 96 %.

Bei dem Styrol-Butadien-Copolymer (SBR) handelt es sich um ein ölverstrecktes Lösungs-SBR mit 37,5 Teile Öl, einem Vinylgehalt von 20 % und einem Styrolgehalt von 34 %.

Als aromatisches Öl wird Naftolen ZD der Chemetall verwendet; bei Vulkanox 4020 handelt es sich um 6PPD und bei Vulkanox HS/LG handelt es sich um TMQ der Bayer AG. Struktol A 60 ist ein Mastizierhilfsmittel, Struktol WB 212 ist ein Verarbeitungshilfsmittel von Schill + Seilacher, Vulkacit D (DPG) und Vulkacit CZ (CBS) sind Handelsprodukte der Bayer AG. Antilux 654 ist ein Ozonschutzmittel der Rhein-Chemie und Wingstay 100 ist ein Alterungsschutzmittel von Goodyear Chemicals.

Ultrasil 7000 GR ist eine gut dispergierbare gefällte Kieselsäure der Degussa AG mit einer BET Oberfläche von 175 m$^2$/g. Das Produkt X 50 S ist eine 1:1 Abmischung von Si 69 (Bis-triethoxysilylpropyltetrasulfan) und Corax N 330 der Degussa AG.

Die Kautschukmischungen werden in einem Innenmischer entsprechend der Mischvorschrift in Tabelle 2 hergestellt.

**Tabelle 2**

| Stufe 1 | |
|---|---|
| **Einstellungen** | |
| Mischaggregat | Werner & Pfleiderer E-Typ |
| Drehzahl | 60 min$^{-1}$ |
| Stempeldruck | 5,5 bar |
| Leervolumen | 1,58 L |
| Füllgrad | 0,56 |
| Durchflußtemp. | 70 °C |
| **Mischvorgang** | |
| 0 bis 1 min | SMR 10 + SBR + BR |
| 1 bis 3 min | Ruß, ½ Kieselsäure, X 50 S, Stearinsäure, aromatisches Öl |
| 3 bis 4 min | ½ Kieselsäure, Struktol A 60 |
| 4 min | Säubern |
| 4 bis 5 min | Mischen |
| 5 min | Säubern |
| 5 bis 6 min | Mischen und ausfahren |
| Batch-Temp. | 145-150°C |
| Lagerung | 24 h bei Raumtemperatur |

| Stufe 2 | |
|---|---|
| **Einstellungen** | |
| Mischaggregat | Wie in Stufe 1 bis auf: |
| Drehzahl | 80 min$^{-1}$ |
| Durchflußtemp. | 80 °C |
| Füllgrad | 0,53 |
| **Mischvorgang** | |
| 0 bis 2 min | Batch Stufe 1 aufbrechen |
| 2 bis 4 min | Kieselsäure, X 50 S, aromatisches Öl, Vulkanox 4020, Vulkanox HS/LG, Antilux 654, Struktol WB 212, Wingstay 100 |
| 4 bis 5 min | Mischen |
| 5 min | Ausfahren |
| Batch-Temp. | 150°C |
| Lagerung | 4 h bei Raumtemperatur |

| Stufe 3 | |
|---|---|
| **Einstellungen** | |
| Mischaggregat<br>Drehzahl<br>Füllgrad<br>Durchflußtemp. | Wie in Stufe 1 bis auf<br>40 min$^{-1}$<br>0,51<br>50 °C |
| **Mischvorgang** | |
| 0 bis 2 min<br><br>2 min | Batch Stufe 2, Beschleuniger, Schwefel,<br>ZnO, Verarbeitungshilfsmittel<br>Ausfahren und auf Labormischwalzwerk Fell<br>bilden<br>(Durchmesser 200 mm, Länge 450 mm,<br>Durchflußtemperatur 50°C)<br><br>Homogenisieren:<br>3* links, 3* rechts einschneiden und<br>umklappen sowie<br>8* bei weitem Walzenspalt (1 mm) und<br>3* bei engem Walzenspalt (3,5 mm) stürzen<br>Fell ausziehen. |
| Batch-Temp. | 85-95°C |

In Tabelle 3 sind die Methoden für die Gummitestung zusammengestellt.

Die Mischungen werden je 30 Minuten bei 168°C vulkanisiert.

Tabelle 3

| Physikalische Testung | Norm/ Bedingungen |
|---|---|
| ML 1+4, 100°C, 3. Stufe | DIN 53523/3, ISO 667 |
| Vulkameterprüfung, 160°C<br>    Dmax - Dmin [dNm]<br>    t10% und t95% [min] | DIN 53529/3, ISO 6502 |
| Zugversuch am Ring, 23°C<br>    Zugfestigkeit [MPa]<br>    Spannungswerte [MPa]<br>    Bruchdehnung [%] | DIN 53504, ISO 37 |
| Shore-A-Härte, 23°C [-] | DIN 53 505 |
| Viskoelastische Eigenschaften, 0 und 60°C, 16 Hz, 50 N Vorkraft und 25 N Amplitudenkraft<br>    Komplexer Modul E* [MPa]<br>    Verlustfaktor tan $\delta$[] | DIN 53 513 |
| Ball Rebound, [%] | ASTM D 5308 |
| Goodrich-Flexometertest, 0,175 inch Hub, 25 min, 23°C<br>    Einstichtemperatur $\Delta T_{center}$ [°C]<br>    Permanent Set [%]<br>    Compression Set [%] | DIN 53533, ASTM D 623 A |
| DIN-Abrieb, 10 N Kraft [mm$^3$] | DIN 53 516 |

Tabelle 4 zeigt die Ergebnisse der gummitechnischen Prüfung.

## Tabelle 4

| Merkmal: | Einheit: | Vergleichsbeispiel 1 | Vergleichsbeispiel 2 | Vergleichsbeispiel 3 | Vergleichsbeispiel 4 | Beispiel 1 |
|---|---|---|---|---|---|---|
| **Rohmischungsergebnisse** | | | | | | |
| ML(1+4) bei 100°C | [-] | 86 | 78 | 76 | 108 | 74 |
| Dmax-Dmin (160°C) | [Nm] | 6,6 | 8,4 | 7,9 | 10,6 | 9,9 |
| t 10% (160°C) | [min] | 6,9 | 4,9 | 5,0 | 6,0 | 4,1 |
| t 95% (160°C) | [min] | 26,4 | 19,5 | 25,1 | 31,9 | 13,7 |
| **Vulkanisatergebnisse** | | | | | | |
| Zugfestigkeit | [MPa] | 19,8 | 20,5 | 21,5 | 13,4 | 19,4 |
| Spannungswert 100% | [MPa] | 2,3 | 3,2 | 3,3 | 3,1 | 2,9 |
| Spannungswert 300% | [MPa] | 9,9 | 7,7 | 13,9 | - | 13 |
| Spannungswert 300%/100% | [-] | 4,3 | 2,4 | 4,2 | - | 4,5 |
| Bruchdehnung | [%] | 530 | 430 | 450 | 290 | 420 |
| Shore-A-Härte | [-] | 64 | 72 | 68 | 70 | 71 |
| Ball-Rebound (0°C) | [%] | 11,1 | 12,1 | 11,0 | 10,6 | 10,8 |
| Ball-Rebound (60°C) | [%] | 47,8 | 48,0 | 47,7 | 49,6 | 50,7 |
| $\Delta$ $T_{center}$ Goodrich (RT,25 min) | [°C] | 106 | 88 | 88 | 100 | 81 |
| Permanent Set | [%] | 7,8 | 4,7 | 3,2 | 3,3 | 2,6 |
| Compression Set | [%] | 15,8 | 15,7 | 14,0 | 9,8 | 13,6 |
| DIN-Abrieb | [mm³] | 116 | 86 | 92 | 79 | 82 |
| E* 0°C | [MPa] | 27,7 | 30,4 | 31,2 | 50,0 | 31,3 |
| E* 60°C | [MPa] | 9,4 | 9,4 | 9,2 | 11,1 | 10,1 |
| Verlustfaktor tan δ (0°C) | [-] | 0,519 | 0,548 | 0,539 | 0,480 | 0,551 |
| Verlustfaktor tan δ (60°C) | [-] | 0,200 | 0,174 | 0,176 | 0,178 | 0,153 |

Die Daten in Tabelle 4 zeigen, dass die erfindungsgemäße Kautschukmischung Beispiel 1 die niedrigste Mooney-Viskosität, die kürzeste t 95%-Vulkanisationszeit, den größten Verstärkungsfaktor (Spannungswert 300%/ 100%), den niedrigsten $\Delta T_{center}$-Wert und Permanent Set, den höchsten Ball Rebound Wert 60°C und tan δ 0°C-Wert (verbessertes Naßrutschen) und den niedrigsten tan δ 60°C-Wert (verbesserter Rollwiderstand) besitzt.

**Patentansprüche**

1. Kautschukmischung, **dadurch gekennzeichnet, daß** diese enthält

   (a) einen Kautschuk oder eine Mischung von Kautschuken,
   (b) mindestens einen Füllstoff und
   (c) ein Verarbeitungshilfsmittel der allgemeinen Formel (I)

$$R^1 - O - R^2 \qquad\qquad (I),$$

   wobei $R^1$, $R^2$ gleich oder verschieden sein können und aus hydroxisubstituierten $C_1$ bis $C_8$ Alkylresten bestehen, mit der Maßgabe, daß die hydroxisubstituierten Alkylreste $R^1$ und $R^2$ einzeln oder zusammen keinen Bereich mit mindestens 2 Hydoxylgruppen besitzt, die als 1,2- oder 1,3-Diole vorliegen.

2. Kautschukmischungen nach Anspruch 1,
   **dadurch gekennzeichnet,**
   **dass** das Verarbeitungshilfsmittel 1,7-Dihydroxi-dipropylether, 2,6-Dihydroxi-dipropylether oder 3,5-Dihydroxi-dipropylether ist.

3. Kautschukmischungen nach Anspruch 1,
   **dadurch gekennzeichnet,**
   **dass** die Kautschukmischung Organosilan enthält.

4. Kautschukmischungen nach Anspruch 1,
   **dadurch gekennzeichnet,**
   **dass** als Füllstoff silikatischer Füllstoff und/oder Ruß verwendet wird.

5. Verfahren zur Herstellung von Kautschukmischungen nach Anspruch 1,
   **dadurch gekennzeichnet,**
   **daß** man den Kautschuk oder die Mischung von Kautschuken, den Füllstoff und das Verarbeitungshilfsmittel gemäß der Formel I in einem Mischaggregat mischt.

6. Verwendung der Kautschukmischung gemäß Anspruch 1 in Formkörper.

7. Verwendung der Kautschukmischung gemäß Anspruch 1 in Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

8. Formkörper, erhältlich aus einer Kautschukmischung nach Anspruch 1, durch Vulkanisation.

## EUROPÄISCHER RECHERCHENBERICHT

**Europäisches Patentamt**

**Nummer der Anmeldung**

EP 02 01 1235

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 393 816 A (KONDO HITOSHI ET AL) 28. Februar 1995 (1995-02-28) * Zusammenfassung; Ansprüche * * Beispiel 18; Tabelle 6 * | 1-8 | C08K5/06 C08L21/00 |
| X | EP 0 947 548 A (BAYER AG) 6. Oktober 1999 (1999-10-06) * Seite 4, Zeile 7 - Zeile 17 * * Zusammenfassung; Ansprüche; Beispiel 2B * | 1,3-8 | |

**RECHERCHIERTE SACHGEBIETE (Int.Cl.7)**

C08K

Der vorliegende Recherchenbericht wurde für alle Patentansprüche erstellt

| Recherchenort | Abschlußdatum der Recherche | Prüfer |
|---|---|---|
| DEN HAAG | 24. September 2002 | Mettler, R-M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 01 1235

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-09-2002

| Im Recherchenbericht angeführtes Patentdokument | | | Datum der Veröffentlichung | Mitglied(er) der Patentfamilie | | Datum der Veröffentlichung |
|---|---|---|---|---|---|---|
| US 5393816 | A | | 28-02-1995 | JP | 3136182 B2 | 19-02-2001 |
| | | | | JP | 5154850 A | 22-06-1993 |
| | | | | JP | 3181675 B2 | 03-07-2001 |
| | | | | JP | 5245849 A | 24-09-1993 |
| | | | | JP | 3179179 B2 | 25-06-2001 |
| | | | | JP | 5278042 A | 26-10-1993 |
| | | | | JP | 6128416 A | 10-05-1994 |
| | | | | DE | 69214099 D1 | 31-10-1996 |
| | | | | DE | 69214099 T2 | 06-02-1997 |
| | | | | EP | 0546516 A2 | 16-06-1993 |
| | | | | ES | 2092619 T3 | 01-12-1996 |
| | | | | US | 5441573 A | 15-08-1995 |
| EP 0947548 | A | | 06-10-1999 | DE | 19814655 A1 | 07-10-1999 |
| | | | | EP | 0947548 A1 | 06-10-1999 |
| | | | | JP | 11323021 A | 26-11-1999 |
| | | | | US | 6251976 B1 | 26-06-2001 |

EPO FORM P0461

Für nähere Einzelheiten zu diesem Anhang : siehe Amtsblatt des Europäischen Patentamts, Nr.12/82